# EUROPEAN PATENT SPECIFICATION

(11) **EP 2 311 651 B1**
(45) Date of publication and mention of the grant of the patent: **17.04.2013**
(21) Application number: 09013076.6
(22) Date of filing: 16.10.2009
(51) Int. Cl.: B60G 3/01, B60B 33/04, B60B 35/10, B66F 11/04

(54) **Transport device and wheel unit control**
Transportvorrichtung und Radeinheitssteuerung
Dispositif de transport et commande d'unité de roue

(43) Date of publication of application: 20.04.2011
(73) Proprietor: Novoscen AB, 41263 Göteborg (SE)
(72) Inventor: Carlsson, Ingemar, 412 63 Göteborg (SE)

(56) References cited:
- EP-A2- 0 829 420
- DE-A1- 3 434 385
- FR-A1- 2 848 913
- US-A- 5 609 108
- US-A1- 2004 129 491

## Description

### TECHNICAL FIELD

The present invention relates to a wheel unit which can be used in different types of transport devices. The present invention also relates to a transport device having at least one such wheel unit. The wheel unit and the transport device according to the invention can be used in applications where disturbances such as steering errors and rolling resistances from passive wheels are troublesome, for example stagecraft applications and heavy industrial transports. Such a wheel unit is known from US 5 609 108 A that forms the closest prior art document.

### BACKGROUND OF THE INVENTION

In connection with stagecraft work, such as moving scenery, pieces of scenery, grandstands, podiums and other stage equipment, special transport equipment, which is designed to be capable of moving bulky and heavy loads along a floor surface in a controlled manner, is often used.

It is previously known with transport equipment for stagecraft work utilizing air cushions to support the load which is to be transported. Such systems can facilitate the movement of heavy loads, but have certain disadvantages, however, such as high air and energy consumption and dust problems. Systems with air cushions require relatively tight and smooth floor surfaces in order to function in an efficient and predictable way. This is a problem in stagecraft applications, since stage floors typically consist of several platforms with intermediate gaps. Furthermore, systems with air cushions have a high noise level, making them unsuitable for use during an ongoing performance.

There are also industrial transport devices having a plurality of computer-controlled wheels attached to the underside of a platform on which the load is supported. Such systems having computer-controlled wheels are controlled by a common control unit and require large computer power, particularly when the number of wheels is large. It has been found that very complicated calculation algorithms are required in order to enable all the computer-controlled wheels to be controlled correctly and safely, especially when taking corners.

In order to reduce the need of computer power, it would be conceivable to replace some of the computer-controlled wheels with "self-steering wheels", for example so called castor wheels similar to the ones used in different transport carts, such as wheelchairs and shopping carts. However, a problem with castor wheels is that such wheels cause undesired lateral displacement and require a large force when switching to the opposite direction of movement. This is a serious problem when moving heavy loads, such as during stagecraft work, where it is very important that the movement direction of the transported load can be controlled with high precision.

### SUMMARY OF THE INVENTION

Accordingly, a first object of the invention is to provide a wheel unit, the turning position of which can be kept under control without any large computer power, and which does not "jam" or turns sideways when a change of direction is initiated by an operator or operating unit, and which does not create disturbances due to skidding wheels, large rolling resistance, or the like.

This first object is achieved by means of a wheel unit according to claim 1, which comprises one or several wheels being arranged for rotation about at least one wheel axle during movement of the wheel unit along a support surface, wherein the wheel axle can be brought into different turning positions about a turning axis extending substantially perpendicularly to the wheel axle and wherein the wheel unit further comprises at least one turning means for controlling the turning position, and wherein the wheel axle is adapted for axial displacement relative to the turning axis in dependence upon external forces acting on the wheel/wheels and/or on the turning axis, by means of the wheel axle being interconnected with the turning axis via a sliding device, wherein the turning means is adapted for returning the axial displacement toward a normal position during the movement along the support surface by means of said control of the turning position.

A second object of the invention is to provide an improved transport device utilizing the advantageous "self-steering" properties of the wheel unit according to the invention and which enables heavy objects to be moved with an exceptionally small propelling/steering force.

This second object is achieved by means of a transport device according to claim 23, which comprises at least one wheel unit with one or several wheels being arranged for rotation about at least one wheel axle during movement of the transport device along a support surface, wherein the wheel axle can be brought into different turning positions about a turning axis extending substantially perpendicularly to the wheel axle and wherein the wheel unit further comprises at least one turning means for controlling the turning position, wherein the wheel axle is adapted for axial displacement relative to the turning axis in dependence upon external forces acting on the wheel/wheels and/or on the turning axis, by means of the wheel axle being interconnected with the turning axis via a sliding device, and wherein the turning means is adapted for returning the axial displacement toward a normal position during the movement along the support surface by means of said control of the turning position.

### BRIEF DESCRIPTION OF THE DRAWINGS

In the following, a number of embodiments of the invention will be described more closely, only in the form of examples and with reference to the accompanying schematic drawings, in which:
Figure 1A shows an explanatory sketch of a wheel unit according to a first embodiment of the invention, as seen in a horizontal plane and partially shown in section;
Figure 1B shows an explanatory sketch of the wheel unit of Figure 1A, as seen from above and with certain components removed;
Figure 2A shows a perspective view of a wheel unit according to a preferred embodiment of the invention;
Figure 2B shows a view straight from the front, partially in section, of the wheel unit of Figure 2A;
Figure 2C shows a sectional view along the line A-A in Figure 2B;
Figure 2D illustrates axial displacement of a wheel axle relative to a turning axis;
Figure 2E illustrates tilting and/or displacement of the wheel axle forward or backward relative to the turning axis; and
Figure 3 shows a schematic illustration of the underside of a transport device according to a preferred embodiment of the invention.

### DESCRIPTION OF EMBODIMENTS OF THE INVENTION

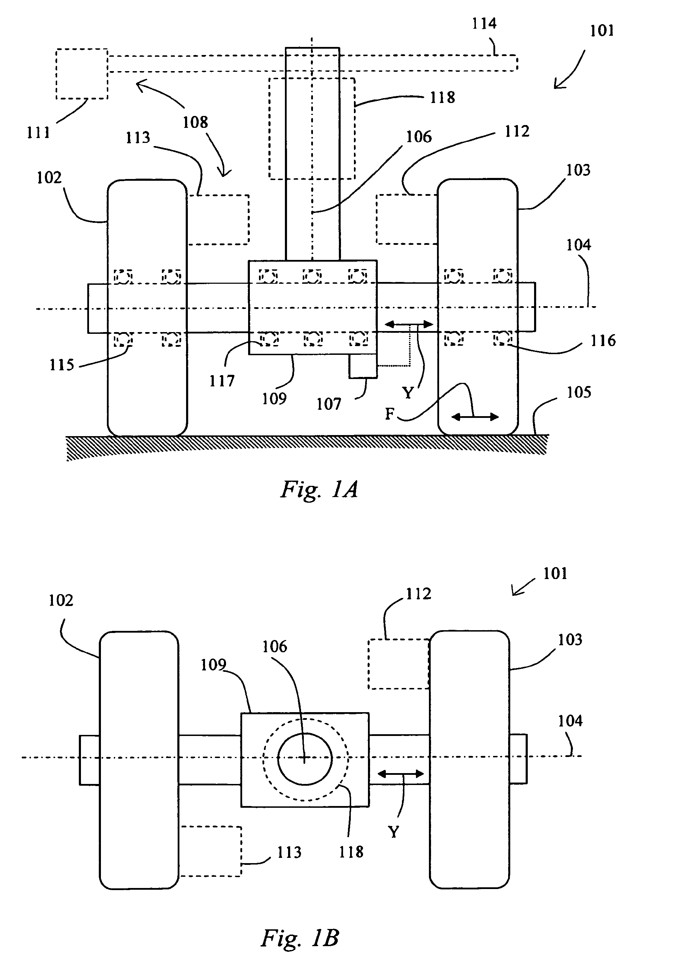

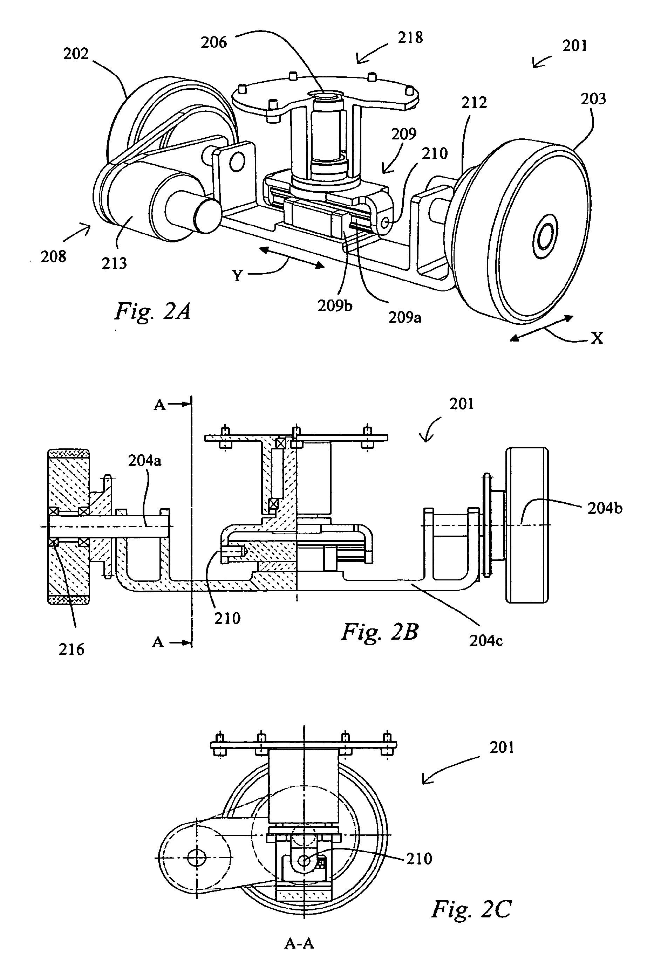

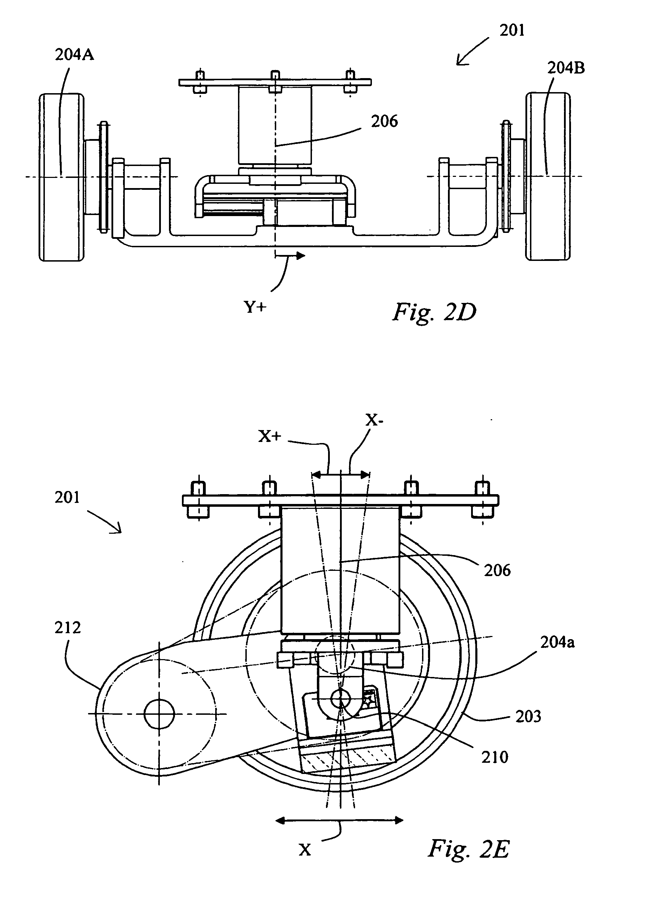

In the following, a number of embodiments of a wheel unit according to the invention will be described, with simultaneous reference to Figures 1A-1B and 2A-2E, respectively.

The wheel unit 101; 201 comprises one or several wheels 102, 103; 202, 203 being arranged for rotation about at least one wheel axle 104; 204a, 204b during movement of the wheel unit along a support surface 105. The wheel axle can be brought into different turning positions about a turning axis 106; 206, extending substantially perpendicularly to the wheel axle. The wheel unit further comprises at least one turning means for controlling the turning position. According to the invention, the wheel axle 104; 204a, 204b is adapted for axial displacement Y relative to the turning axis 106; 206 in dependence upon external forces F acting on the wheel/wheels 102, 103; 202, 203 and/or on the turning axis 106; 206, wherein the turning means 108; 208 is adapted for returning the axial displacement toward a normal position during the movement along the support surface.

In a preferred embodiment of the invention, the wheel unit 101; 201 comprises a first sensor 107 for sensing a value of the axial displacement, wherein the turning means 108; 208 is adapted for controlling the turning position in dependence upon the sensed value of the axial displacement.

Even more advantageously, the wheel unit 101; 201 comprises at least one second sensor (not shown in the Figures) adapted for detecting a desired rotational direction of at least one wheel 102, 103; 202, 203, wherein the turning means 108; 208 is adapted for controlling the turning position in dependence upon both the sensed value of the axial displacement and the detected desired rotational direction.

In a particularly preferred embodiment, illustrated in Figures 2A-2E, the wheel unit 201 exhibits at least one normal rolling direction X and an equilibrium position when the wheels are unloaded by forces from the support surface in or counter to the normal rolling direction. In the particularly preferred embodiment, the wheel axle 204a, 204b further is arranged for tilting and/or displacement forward X+ or backward X- relative to the turning axis 206 when the wheel unit leaves the equilibrium position, wherein the wheel unit 201 further comprises a third sensor (not shown in the Figures) for sensing a value of the tilting and/or displacement forward or backward and is provided with means for controlling the rotational speed of at least one wheel 203 in dependence upon the sensed value X+ of the tilting and/or displacement and for returning the wheel unit toward the equilibrium position during the movement along the support surface. In this embodiment, the wheel unit 201 advantageously comprises at least one pivot axis 210, which preferably extends substantially perpendicularly to the turning axis 206 and substantially in parallel with the wheel axle 204a, 204b, in order to enable the tilting of the wheel axle forward X+ or backward X- relative to the turning axis 206 when the wheel unit leaves the equilibrium position. The above-mentioned first, second and third sensors can be of any suitable type.

In one embodiment, illustrated by Figures 1A and 1B, the wheel unit 101 has a continuous wheel axle 104 with two wheels 102, 103 rotatably mounted at a respective end of the wheel axle, wherein the wheel axle is interconnected with the turning axis via a sliding device 109 enabling the axial displacement of the wheel axle 104 relative to the turning axis 106.

In another embodiment, illustrated by Figures 2A-2E, the wheel unit 201 has a divided wheel axle consisting of two axle halves 204a, 204b being interconnected with each other via a linear beam 204c, wherein the linear beam is interconnected with the turning axis 206 via a sliding device 209 enabling the axial displacement of the wheel axle 204a, 204b, 204c relative to the turning axis 206.

In one design, the sliding device comprises a first sliding member 109, 209a connected to the turning axis 106; 206 and a second sliding member 104; 209b connected to the wheel axle, wherein the first and second sliding members are slidingly interconnected with each other in order to enable the axial displacement of the wheel axle 104; 204a, 204b, 204c relative to the turning axis 106; 206.

In the embodiment according to Figures 1A and 1B, the sliding device comprises a ball bushing 109 mounted on the turning axis 106.

In the embodiment according to Figures 2A-2E, the sliding device 209 comprises a first geometric cross-sectional profile 209a being adapted for sliding in a corresponding, second geometric cross-sectional profile 209b. The sliding device is particularly advantageously a linear unit with low friction, e.g. a linear unit with steel balls similar to a ball bearing, since it is of outermost importance for the function of the wheel unit that the sliding device produces as small frictional forces as possible.

In a preferred embodiment of the wheel unit according to the invention, the turning means 108, 208 comprises at least one motor 111; 112, 113; 212, 213, preferably an electric motor, which turns the wheel axle 104; 204 about the turning axis 106; 206 in dependence upon the sensed value of the axial displacement and preferably also in dependence upon the detected desired rotational direction. The turning means 108 can comprise a motor 111 which controls the turning position via a gear ring 114 or another suitable member on the turning axis 106, as schematically indicated in Fig. 1A. In a preferred embodiment of the invention, the turning means 108; 208 comprises at least one motor 112, 113; 212, 213 which controls the turning position by rotating one or several of the wheels 102, 103; 202, 203 with an adapted speed, as indicated in Fig. 1A and Fig. 2A, respectively.

In the particularly preferred embodiment according to Figures 2A-2E, the wheel unit 201 comprises at least one motor 212, 213, preferably an electric motor, which controls the rotational speed of at least one wheel 202, 203 in dependence upon a sensed value of the tilting and/or displacement forward X+ or backward X- of the wheel axle 204c relative to the turning axis 206.

The wheel unit according to the invention preferably comprises at least one regulator which controls the turning position of the wheel axle in dependence upon the axial displacement of the wheel axle relative to the turning axis. Even more advantageously, the wheel unit comprises at least one regulator which controls the turning position of the wheel axle in dependence upon the derivative of the axial displacement of the wheel axle relative to the turning axis. By using the derivative of the axial displacement, information is obtained faster about the direction in which the wheel axle should be turned in order to obtain as efficient steering error compensation as possible.

In one advantageous embodiment, the wheel unit comprises at least one regulator which controls the turning position of the wheel axle in dependence upon a desired rotational direction of at least one wheel.

In another advantageous embodiment, the wheel unit comprises at least one regulator which controls the turning position of the wheel axle in dependence upon a sensed rotational direction of at least one wheel. The sensing of the rotational direction of the wheel provides the regulator with the information needed in order to immediately start turning the wheel axle in the direction resulting in the fastest steering error compensation.

In the particularly preferred embodiment, the wheel unit according to the invention comprises at least one regulator which controls the rotational speed of one or several wheels in dependence upon the tilting and/or displacement forward or backward of the wheel axle relative to the turning axis. Such a rolling resistance compensation results in a wheel unit which can be brought to roll and kept rolling with a very small force, since the rotational speed of the wheels is controlled in dependence upon the actual resistance to movement.

The regulator can advantageously be a so-called zero-servo.

In one embodiment of the wheel unit according to the invention, the turning means is adapted to be controllable by a signal from an external operating unit.

Advantageously, the wheel unit according to the invention has wheels with an outer diameter within the interval 50 - 250 mm, but embodiments with other wheel dimensions are possible. The wheels can advantageously be made of a polymer or composite material. In certain applications, the wheel unit can have wheels consisting of a wheel centre made of metal encircled by a resilient material, such as a rubber material.

As will be evident to the skilled person, the wheel unit 101; 201 according to the invention further comprises suitably arranged bearing units 115, 116 for the wheels/wheel axles and, if necessary, also one or several bearing units 117 for the above-mentioned sliding device 109. Furthermore, the wheel unit preferably comprises a suitable bearing unit or suspension 118; 218 for the turning axis 106; 206. Since such structural members, *per se,* are well known to the skilled person, they will not be described more closely herein.

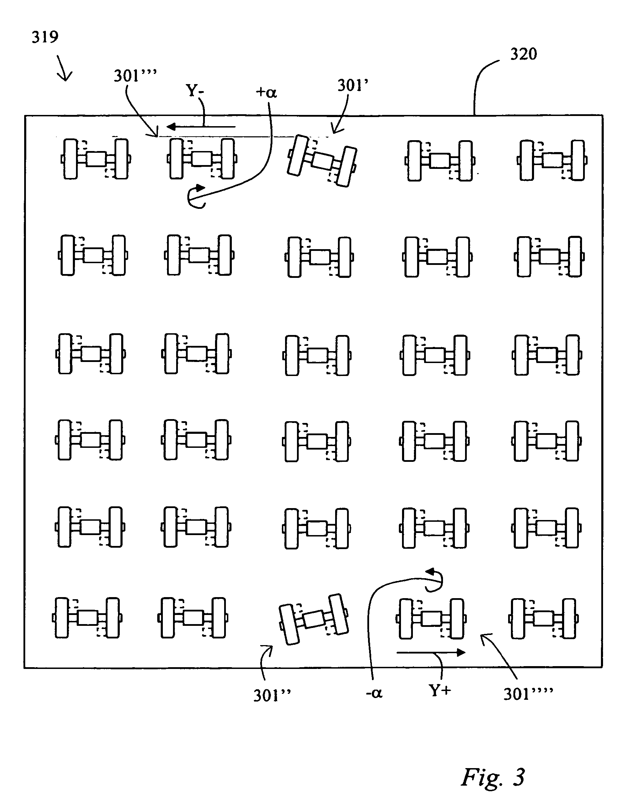

In the following a number of embodiments of a transport device according to the invention will be described with reference to the attached Figure 3.

The transport device 319 comprises at least one wheel unit 301"', 301"" with one or several wheels being arranged for rotation about at least one wheel axle during movement of the transport device along a support surface, wherein the wheel axle can be brought into different turning positions +α, -α about a turning axis extending substantially perpendicularly to the wheel axle and wherein the wheel unit further comprises at least one turning means for controlling the turning position. According to the invention, the wheel axle is adapted for axial displacement Y-, Y+ relative to the turning axis in dependence upon external forces acting on the wheel /wheels and/or on the turning axis, wherein the turning means is adapted for returning the axial displacement toward a normal position during the movement along the support surface.

In one advantageous embodiment of the transport device, at least the majority of the wheel units are non-driven, wherein the movement direction of the transport device is substantially determined by external forces acting on the transport device.

The transport device 319 advantageously has at least two steerable wheel units 301', 301", the turning positions of which can be controlled by a signal from an operating unit.

In a preferred embodiment, the transport device 319 has at least one wheel unit 301"', 301"" with a wheel axle and an integrated turning means which automatically controls the turning position +α, -α of the wheel axle about a turning axis on the basis of a sensed value Y-, Y+ for an axial displacement of the wheel axle relative to the turning axis.

In another advantageous embodiment, the transport device 319 has at least one wheel unit 301"', 301"" with a wheel axle and an integrated turning means which automatically controls the turning position +α, -α of the wheel axle about a turning axis on the basis of a detected desired rotational direction of at least one wheel of the wheel unit.

In a particularly preferred embodiment, the transport device 319 has at least one wheel unit 301"', 301"" with a wheel axle and an integrated means for rolling resistance compensation which automatically controls the rotational speed of at least one wheel of the wheel unit or wheel units on the basis of a sensed value of a tilting and/or displacement forward or backward of the wheel axle relative to the turning axis.

The transport device 319 according to the invention preferably has at least two wheel units 301', 301" with driven wheels for propulsion and/or direction change and/or speed control during rolling resistance compensation.

In a particularly preferred embodiment, a plurality of the wheel units 301"', 301"" of the transport device 319 are provided with an integrated regulator of their own for automatic control of the turning position +α, -α of the wheel axle of the respective wheel unit in dependence upon a sensed value Y-, Y+ of axial displacement of the wheel axle caused by forces acting on the wheels of the wheel unit from the support surface, so that the axial displacement continuously is controlled toward a minimum. The integrated regulator is advantageously adapted for automatic control of the turning position +α, -α of the wheel axle of the respective wheel unit also in dependence upon a detected desired rotational direction of at least one of the wheels. In a particularly advantageous embodiment, a plurality of the wheel units 301"', 301"" of the transport device 319 are provided with an integrated regulator of their own for automatic rolling resistance compensation.

The wheels of the wheel units are advantageously vertically adjustable relative to the plane of the transport device 319 and/or at least partially recessed into the underside of the transport device.

The transport device according to the invention is advantageously designed to be capable of being brought into a position where the transport device rests firmly against the support surface after putting down a transported load.

The transport device according to the invention can be provided with manual operating means placed onboard, or directly connected to the transport device. Alternatively or additionally, the transport device according to the invention can be adapted to be remotely controllable from a separate operating unit.

In one embodiment of the invention, the wheel units of the transport device are pivotally mounted directly on the load which is to be moved (not shown in the figures).

In another embodiment, the wheel units of the transport device 319 are pivotally mounted on the underside of a load platform 320, which in its turn supports the load which is to be moved, as is shown the attached Figure 3.

The transport device according to the invention is preferably, but not necessarily, dimensioned to be capable of transporting a load which is heavier than 500 kg. The transport device is advantageously designed to be capable of transporting the load at a distance from the support surface which is smaller than 20 centimeters, more advantageously smaller than 10 centimeters.

The transport device 319 is particularly advantageously designed to be used for moving stage equipment, such as scenery, pieces of scenery, grandstands, podiums and the like. However, many other uses are conceivable for the transport device according to the invention, such as transports and moves of heavy industrial equipment.

In the foregoing, a number of embodiments have been described with reference to the figures in the accompanying drawings. It must be understood that the described embodiments and the details in the figures should only be regarded as examples, and that many other embodiments of the invention are possible within the scope of the following claims.

## Claims

1. A wheel unit (101; 201), comprising one or several wheels (102, 103; 202, 203) being arranged for rotation about at least one wheel axle (104; 204a, 204b) during movement of the wheel unit along a support surface (105), wherein the wheel axle can be brought into different turning positions about a turning axis (106; 206) extending substantially perpendicularly to the wheel axle, and wherein the wheel unit further comprises at least one turning means for controlling the turning position, **characterized in that** the wheel axle (104; 204a, 204b) is adapted for axial displacement (Y) relative to the turning axis (106; 206) in dependence upon external forces (F) acting on the wheel/wheels (102, 103; 202, 203) and/or on the turning axis (106; 206), by means of the wheel axle being interconnected with the turning axis via a sliding device, wherein the turning means (108; 208) is adapted for returning the axial displacement toward a normal position during the movement along the support surface by means of said control of the turning position.

2. The wheel unit (101; 201) according to claim 1,
**characterized in that** the wheel unit (101; 201) comprises a first sensor (107) for sensing a value of the axial displacement, and wherein the turning means (108; 208) is adapted for controlling the turning position in dependence upon the sensed value of the axial displacement.

3. The wheel unit according to claim 1 or 2,
**characterized in that** the wheel unit (101; 201) further comprises at least one second sensor adapted for detecting a desired rotational direction of at least one wheel (102, 103; 202, 203), wherein the turning means (108; 208) is adapted for controlling the turning position in dependence upon both the sensed value of the axial displacement and the detected desired rotational direction.

4. The wheel unit according to any one of the claims 1-3,
wherein the wheel unit (201) exhibits at least one normal rolling direction (X) and an equilibrium position when the wheels are unloaded by forces from the support surface in or counter to the normal rolling direction,
**characterized in that** the wheel axle (204a, 204b) further is arranged for tilting and/or displacement forward (X+) or backward (X-) relative to the turning axis (206) when the wheel unit leaves the equilibrium position, by the wheel unit (201) comprising at least one pivot axis (210), which preferably extends substantially perpendicularly to the turning axis (206) and substantially in parallel with the wheel axle (204a, 204b), wherein the wheel unit (201) further comprises a third sensor for sensing a value of the tilting and/or displacement forward or backward, and is provided with means for controlling the rotational speed of at least one wheel (203) in dependence upon the sensed value (X+) of-the tilting and/or displacement and for returning the wheel unit toward the equilibrium position during the movement along the support surface.

5. The wheel unit according to any one of the claims 1-4,
**characterized in that** the wheel unit (101) has a continuous wheel axle (104) with two wheels (102, 103) rotatably mounted at a respective end of the wheel axle, wherein the wheel axle is interconnected with the turning axis via a sliding device (109) enabling the axial displacement of the wheel axle (104) relative to the turning axis (106).

6. The wheel unit according to any one of the claims 1-4,
**characterized in that** the wheel unit (201) has a divided wheel axle consisting of two axle halves (204a, 204b) being interconnected with each other via a linear beam (204c), wherein the linear beam is interconnected with the turning axis (206) via a sliding device (209) enabling the axial displacement of the wheel axle (204a, 204b, 204c) relative to the turning axis (206).

7. The wheel unit according to any one of the claims 5-6,
**characterized in that** the sliding device comprises a ball bushing (109) mounted on the turning axis (106).

8. The wheel unit according to any one of the claims 1-7,
**characterized in that** the turning means (108; 208) comprises at least one motor (111; 112, 113; 212, 213), preferably an electric motor, which turns the wheel axle (104; 204) about the turning axis (106; 206) in dependence upon the sensed value of the axial displacement and preferably also in dependence upon the detected desired rotational direction.

9. The wheel unit according to any one of the claims 1-7,
**characterized in that** the turning means (108) comprises a motor (111) which controls the turning position via a gear ring (114) on the turning axis (106).

10. The wheel unit according to any one of the claims 1-7,
**characterized in that** the turning means (108) comprises at least one motor (112, 113; 212, 213) which controls the turning position by rotating one or several of the wheels (102, 103; 202, 203) with an adapted speed.

11. The wheel unit according to any one of the preceding claims,
**characterized in that** the wheel unit (201) comprises at least one motor (212, 213), preferably an electric motor, which controls the rotational speed of at least one wheel (202, 203) in dependence upon a sensed value of the tilting and/or displacement forward or backward of the wheel axle (204c) relative to the turning axis (206).

12. The wheel unit according to any one of the preceding claims,
**characterized in that** the wheel unit has wheels with an outer diameter within the interval 50 - 250 mm.

13. A transport device (319), comprising at least one wheel unit (301"', 301""), with one or several wheels being arranged for rotation about at least one wheel axle during movement of the transport device along a support surface, wherein the wheel axle can be brought into different turning positions (+α, -α) about a turning axis extending substantially perpendicularly to the wheel axle and wherein the wheel unit further comprises at least one turning means for controlling the turning position, **characterized in that** the wheel axle is adapted for axial displacement (Y-, Y+) relative to the turning axis in dependence upon external forces acting on the wheel/wheels and/or on the turning axis, by means of the wheel axle being interconnected with the turning axis via a sliding device, wherein the turning means is adapted for returning the axial displacement toward a normal position during the movement along the support surface by means of said control of the turning position.

14. The transport device according to any one of the claim 13,
**characterized in that** the wheels of the wheel units are vertically adjustable relative to the plane of the transport device (319).

15. A use of a transport device according to any one of the claims 13-14,
**characterized in that** the transport device (319) is used for moving stage equipment, such as scenery, pieces of scenery, grandstands, podiums and the like.

## Patentansprüche

1. Radeinheit (101; 201), die ein oder mehrere Räder (102, 103; 202, 203) umfasst, die angeordnet sind für Rotation über wenigstens eine Radachse (104; 204a, 204b) während der Bewegung der Radeinheit entlang einer Auflagefläche (105), wobei die Radachse in verschiedene Drehpositionen über eine Drehachse (106; 206) gebracht werden kann, die sich im Wesentlichen senkrecht zur Radachse erstreckt, und wobei die Radeinheit weiterhin wenigstens ein Drehmittel zur Steuerung der Drehposition umfasst, **dadurch gekennzeichnet, dass** die Radachse (104; 204a, 204b) angepasst ist für eine Axialverschiebung (Y) bezogen auf die Drehachse (106; 206) in Abhängigkeit von externen Kräften (F), die auf das/die Rad/Räder (102, 103; 202, 203) und/oder die Drehachse (106, 206) einwirken, was dadurch möglich wird, dass die Radachse mit der Drehachse über eine Schiebevorrichtung verbunden ist, wobei das Drehmittel (108; 208) angepasst ist, um die Axialverschiebung während der Bewegung entlang der Auflagefläche mit Hilfe der Steuerung der Drehposition in eine normale Position zurück zu versetzen.

2. Radeinheit (101; 201) nach Anspruch 1,
**dadurch gekennzeichnet, dass** die Radeinheit (101; 201) einen ersten Sensor (107) zum Abtasten eines Werts der Axialverschiebung umfasst, und wobei das Drehmittel (108; 208) angepasst ist, um die Drehposition in Abhängigkeit von dem ertasteten Wert der Axialverschiebung zu steuern.

3. Radeinheit nach Anspruch 1 oder 2,
**dadurch gekennzeichnet, dass** die Radeinheit (101; 201) weiterhin wenigstens einen zweiten Sensor umfasst, der angepasst ist, um die gewünschte Drehrichtung von wenigstens einem Rad (102, 103; 202, 203) zu erkennen, wobei das Drehmittel (108; 208) angepasst ist, um die Drehposition in Abhängigkeit von sowohl dem ertasteten Wert der Axialverschiebung als auch der ermittelten gewünschten Drehrichtung zu steuern.

4. Radeinheit nach einem der Ansprüche 1-3,
wobei die Radeinheit (201) über wenigstens eine normale Rollrichtung (X) und eine Ruhelage verfügt, wenn die Räder durch Krafteinwirkung in oder gegen die normale Rollrichtung von der Auflagefläche entfernt werden,
**dadurch gekennzeichnet, dass** die Radachse (204a, 204b) weiterhin angeordnet ist, um eine Neigung und/oder Vorwärts- (X+) oder Rückwärts- (X-) Verschiebung bezogen auf die Drehachse (206) vorzunehmen, wenn die Radeinheit (106) die Gleichgewichtslage verlässt, wobei die Radeinheit (201) wenigstens eine Schwenkachse (210) umfasst, die sich vorzugsweise im Wesentlichen senkrecht zur Drehachse (206) und im Wesentlichen parallel zur Radachse (204a, 204b) erstreckt, wobei die Radeinheit (201) weiterhin einen dritten Sensor umfasst, der den Wert der Neigung und/oder Vorwärts- oder Rückwärtsverschiebung ertastet und mit Mitteln zur Steuerung der Drehgeschwindigkeit von wenigstens einem Rad (203) in Abhängigkeit vom ertasteten Wert (X+) der Neigung und/oder Verschiebung und zum Zurückversetzen der Radeinheit in die Gleichgewichtslage während der Bewegung entlang der Auflagefläche ausgestattet ist.

5. Radeinheit nach einem der Ansprüche 1-4,
**dadurch gekennzeichnet, dass** die Radeinheit (101) über eine durchgehende Radachse (104) mit zwei Rädern (102, 103) verfügt, die am jeweiligen Ende der Radachse drehbar montiert sind, wobei die Radachse mit der Drehachse über eine Schiebevorrichtung (109) verbunden ist, was die Achsverschiebung der Radachse (104) bezogen auf die Drehachse ermöglicht (106).

6. Radeinheit nach einem der Ansprüche 1-4,
**dadurch gekennzeichnet, dass** die Radeinheit (201) über eine geteilte Radachse verfügt, die aus zwei Achshälften (204a, 204b) besteht, die miteinander über einen Längsträger (204c) verbunden sind, wobei der Längsträger mit der Drehachse (206) über eine Schiebevorrichtung (209) verbunden ist, was die Axialverschiebung der Radachse (204a, 204b, 204c) bezogen auf die Drehachse (206) ermöglicht.

7. Radeinheit nach einem der Ansprüche 5-6,
**dadurch gekennzeichnet, dass** die Schiebevorrichtung eine Kugelhülse (109) umfasst, die auf der Drehachse (106) montiert ist (106).

8. Radeinheit nach einem der Ansprüche 1-7,
**dadurch gekennzeichnet, dass** das Drehmittel (108; 208) wenigstens einen Antrieb (111; 112, 113; 212, 213) umfasst, der vorzugsweise ein Elektromotor ist, der die Radachse (104; 204) über die Drehachse (106; 206) in Abhängigkeit von dem ertasteten Wert der Axialverschiebung und vorzugsweise auch in Abhängigkeit von der ermittelten gewünschten Drehrichtung dreht.

9. Radeinheit nach einem der Ansprüche 1-7,
**dadurch gekennzeichnet, dass** das Drehmittel (108) einen Antrieb (111) umfasst, der die Drehposition über einen Zahnkranz (114) auf der Drehachse (106) steuert.

10. Radeinheit nach einem der Ansprüche 1-7,
**dadurch gekennzeichnet, dass** das Drehmittel (108) wenigstens einen Antrieb (112, 113; 212, 213) umfasst, der die Drehposition durch Rotation eines oder mehrerer Räder (102, 103; 202, 203) mit einer angepassten Geschwindigkeit steuert.

11. Radeinheit nach einem der vorstehenden Ansprüche,
**dadurch gekennzeichnet, dass** die Radeinheit (201) wenigstens einen Antrieb (212, 213) umfasst, der vorzugsweise ein Elektromotor ist, der die Drehgeschwindigkeit von wenigstens einem Rad (202, 203) in Abhängigkeit von einem ertasteten Wert der Neigung und/oder Vorwärts- oder Rückwärtsverschiebung der Radachse (204c) bezogen auf die Drehachse (206) steuert.

12. Radeinheit nach einem der vorstehenden Ansprüche ,
**dadurch gekennzeichnet, dass** die Radeinheit über Räder mit einem Außendurchmesser innerhalb des Intervalls 50 - 250 mm verfügt.

13. Radeinheit (319), die ein oder mehrere Räder (301"', 301"") umfasst, die angeordnet sind für Rotation über wenigstens eine Radachse während der Bewegung der Radeinheit entlang einer Auflagefläche, wobei die Radachse in verschiedene Drehpositionen (+a, -a) über eine Drehachse gebracht werden kann, die sich im Wesentlichen senkrecht zur Radachse erstreckt, und wobei die Radeinheit weiterhin wenigstens ein Drehmittel zur Steuerung der Drehposition umfasst, **dadurch gekennzeichnet, dass** die Radachse angepasst ist für eine Axialverschiebung (Y-, Y+) bezogen auf die Drehachse in Abhängigkeit von externen Kräften, die auf das/die Rad/Räder und/oder die Drehachse einwirken, was dadurch möglich wird, dass die Radachse mit der Drehachse über eine Schiebevorrichtung verbunden ist, wobei das Drehmittel angepasst ist, um die Axialverschiebung während der Bewegung entlang der Auflagefläche mit Hilfe der Steuerung der Drehposition in eine normale Position zurück zu versetzen.

14. Transportvorrichtung nach einem der Ansprüche 13,
**dadurch gekennzeichnet, dass** die Räder der Radeinheiten bezogen auf die Ebene der Transportvorrichtung (319) senkrecht justierbar sind (319).

15. Verwendung einer Transportvorrichtung nach einem der Ansprüche 13-14,
**dadurch gekennzeichnet, dass** die Transportvorrichtung (319) zum Bewegen von Bühnenausstattung wie Kulissen, Kulissenteilen, Haupttribünen, Podien und Ähnlichem verwendet wird.

## Revendications

1. Unité de roue (101 ; 201), comprenant une ou plusieurs roues (102, 103 ; 202, 203) disposées pour être mises en rotation autour d'au moins un essieu de roue (104, 204a, 204b) pendant le mouvement de l'unité de roue le long d'une surface de support (105), l'essieu de roue pouvant être amené dans différentes positions de rotation autour d'un axe de rotation (106 ; 206) s'étendant sensiblement perpendiculairement à l'essieu de roue, et l'unité de roue comprenant également au moins un moyen de rotation pour contrôler la position de rotation, **caractérisé en ce que** l'essieu de roue (104 ; 204a, 204b) est adapté pour effectuer un déplacement axial (Y) par rapport à l'axe de rotation (106 ; 206) selon l'effet de forces extérieures (F) sur la ou les roues (102, 103 ; 202, 203) et/ou l'axe de rotation (106 ; 206) au moyen de l'essieu de roue interconnecté avec l'axe de rotation par l'intermédiaire d'un dispositif coulissant, le moyen de rotation (108 ; 208) étant adapté pour remettre le déplacement axial en position normale pendant le mouvement le long de la surface de support au moyen de ladite commande de position de rotation.

2. Unité de roue (101 ; 201) selon la revendication 1, **caractérisée en ce que** l'unité de roue (101 ; 201) comprend un premier capteur (107) pour détecter une valeur du déplacement axial, et le moyen de rotation (108 ; 208) étant adapté pour contrôler la position de rotation selon la valeur détectée du déplacement axial.

3. Unité de roue selon la revendication 1 ou 2, **caractérisée en ce que** l'unité de roue (101 ; 201) comprend également au moins un second capteur adapté pour détecter un sens de rotation désiré d'au moins une roue (102, 103 ; 202, 203), le moyen de rotation (108 ; 208) étant adapté pour commander la position de rotation selon la valeur détectée du déplacement axial et le sens de rotation désiré détecté.

4. Unité de roue selon l'une quelconque des revendications 1 à 3, l'unité de roue (201) présentant au moins un sens de roulement (X) normal et une position d'équilibre quand les roues sont déchargées par les forces de la surface de support dans le sens de roulement normal, ou dans le sens contraire à celui-ci, **caractérisé en ce que** l'essieu de roue (204a, 204b) est également disposé pour être incliné et/ou déplacé vers l'avant (X+) ou vers l'arrière (X-) par rapport à l'axe de rotation (206) quand l'unité de roue quitte la position d'équilibre, l'unité de roue (201) comprenant au moins un axe articulé (210) s'étendant de préférence sensiblement perpendiculairement à l'axe de rotation (206) et sensiblement parallèlement à l'essieu de roue (204a, 204b), l'unité de roue (201) comprenant également un troisième capteur pour détecter une valeur d'inclinaison et/ou de déplacement vers l'avant ou vers l'arrière, et est dotée de moyens pour contrôler la vitesse de rotation d'au moins une roue (203) selon la valeur détectée (X+) de l'inclinaison et/ou du déplacement, et pour remettre l'unité de roue en position d'équilibre pendant le mouvement le long de la surface de support.

5. Unité de roue selon l'une quelconque des revendications 1 à 4, **caractérisée en ce que** l'unité de roue (101) comporte un essieu de roue (104) continu, avec deux roues (102, 103) montées de façon rotative à une extrémité respective de l'essieu de roue; l'essieu de roue étant interconnecté avec l'axe de rotation par l'intermédiaire d'un dispositif coulissant (109) permettant le déplacement axial de l'essieu de roue (104) par rapport à l'axe de rotation (106).

6. Unité de roue selon l'une quelconque des revendications 1 à 4, **caractérisée en ce que** l'unité de roue (201) comporte un essieu de roue divisé composé de deux moitiés d'essieu (204a, 204b) interconnectées l'une avec l'autre par l'intermédiaire d'une poutre linéaire (204c), la poutre linéaire étant interconnectée avec l'axe de rotation (206) par l'intermédiaire d'un dispositif coulissant (209) permettant le déplacement axial de l'essieu de roue (204a, 204b, 204c) par rapport à l'axe de rotation (206).

7. Unité de roue selon l'une quelconque des revendications 5 ou 6, **caractérisée en ce que** le dispositif coulissant comprend un manchon à billes (109) monté sur l'axe de rotation (106).

8. Unité de roue selon l'une quelconque des revendications 1 à 7, **caractérisée en ce que** le moyen de rotation (108 ; 208) comprend au moins un moteur (111 ; 112, 113 ; 212, 213), de préférence un moteur électrique, qui fait tourner l'essieu de roue (104 ; 204) autour de l'axe de rotation (106 ; 206) selon la valeur détectée du déplacement axial et de préférence également selon le sens de rotation désiré détecté.

9. Unité de roue selon l'une quelconque des revendications 1 à 7, **caractérisée en ce que** le moyen de rotation (108) comprend un moteur (111) qui contrôle la position de rotation par l'intermédiaire d'une couronne dentée (114) sur l'axe de rotation (106).

10. Unité de roue selon l'une quelconque des revendications 1 à 7, **caractérisée en ce que** le moyen de rotation (108) comprend au moins un moteur (112, 113 ; 212, 213) qui contrôle la position de rotation en mettant en rotation une ou plusieurs des roues (102, 103 ; 202, 203) avec une vitesse adaptée.

11. Unité de roue selon l'une quelconque des revendications précédentes, **caractérisée en ce que** l'unité de roue (201) comprend au moins un moteur (212, 213), de préférence un moteur électrique, qui contrôle la vitesse de rotation d'au moins une roue (202, 203) selon une valeur détectée de l'inclinaison et/ou du déplacement vers l'avant ou vers l'arrière de l'essieu de roue (204c) par rapport à l'axe de rotation (206).

12. Unité de roue selon l'une quelconque des revendications précédentes, **caractérisée en ce que** l'unité de roue comprend des roues avec un diamètre extérieur dans l'intervalle de 50 à 250 mm.

13. Dispositif de transport (319) comprenant au moins une unité de roue (301"', 301""), une ou plusieurs roues étant agencées pour être mises en rotation autour d'au moins un essieu de roue pendant le mouvement du dispositif de transport le long d'une surface de support, l'essieu de roue pouvant être amené dans différentes positions de rotation (+α, -α) autour d'un axe de rotation s'étendant sensiblement perpendiculairement par rapport à l'essieu de roue, et l'unité de roue comprenant également au moins un moyen de rotation pour contrôler la position de rotation, **caractérisé en ce que** l'essieu de roue est adapté pour un déplacement axial (Y-, Y+) par rapport à l'axe de rotation selon les forces extérieures agissant sur la ou les roues, et/ou sur l'axe de rotation, ledit essieu de roue étant interconnecté avec l'axe de rotation par l'intermédiaire d'un dispositif coulissant, ledit moyen de rotation étant adapté pour remettre le déplacement axial en position normale pendant le mouvement le long de la surface de support au moyen dudit contrôle de la position de rotation.

14. Dispositif de transport selon la revendication 13, **caractérisé en ce que** les roues des unités de roues sont réglables verticalement par rapport au plan du dispositif de transport (319).

15. Utilisation d'un dispositif de transport selon l'une quelconque des revendications 13 ou 14, **caractérisé en ce que** le dispositif de transport (319) est utilisé pour déplacer des équipements de scène, tels que les décors, des éléments de scène, des tribunes, des podiums, et analogues.
